# EUROPEAN PATENT APPLICATION

(11) **EP 2 575 089 A1**
(43) Date of publication of application: **03.04.2013**
(21) Application number: 11183253.1
(22) Date of filing: 29.09.2011
(51) Int. Cl.: G06Q 10/00

(54) **Customizable user interface for real-time oilfield data visualization**

(71) Applicant: Service Pétroliers Schlumberger, 75007 Paris (FR); Schlumberger Holdings Limited, Tortola (VG); Prad Research Development Limited, Tortola (VG); Schlumberger Technology B.V., 2514 JG The Hague (NL)
(72) Inventor: Lehnherr, Sebastien, 92350 Le Plessis Robinson (FR); Verluise, Olivier, 92142 Clamart (FR); Verges, Patrick, 92350 Le Plessis Robinson (FR)
(74) Representative: Rzaniak, Martin

(57) **Abstract**

Real-time visualization of well data is provided on a customized user interface. A visualization module server stores a plurality of visualization modules, each of which is configured to graphically display elements of the well data based on aggregated data in a set of data aggregation servers. One or more advanced user computers are each configured to compose viewers including one or more of the visualization modules, and a viewer server stores the viewers composed on the one or more advanced user computers. Each viewer is configured to graphically display well data in real-time specific to a data context of the one or more well sites, e.g., on one or more end user computers that are each configured to access one or more of the composed viewers on the viewer server.

## Description

### TECHNICAL FIELD

The disclosure relates generally to the field of well data acquisition and interpretation. More specifically, the disclosure relates to methods and systems for display of well data on a customizable user interface including a plurality of viewer modules.

### BACKGROUND

Well data can include well log data which are measurements, for example with respect to depth, of selected physical parameters (e.g., resistivity, density, porosity) of earth formations penetrated by a wellbore. Well data can also include well measurement data which are measurements, for example with respect to depth, of selected physical parameters (e.g., pressure, temperature, direction/inclination) of wellbore environment/conditions. Well log data may be recorded by deploying various types of measurement instruments into a wellbore after the wellbore has been drilled, moving the instruments along the wellbore, and recording the measurements made by the instruments. One type of well log data recording includes lowering the instruments at the end of an armored electrical cable (e.g., a wireline cable), and recording the measurements made with respect to the length of the cable extended into the wellbore. Depth within the wellbore may be inferred from the extended length of the cable. Recordings made in this way can be substantially directly correlated to measurement depth within the wellbore. Well log and/or measurement data may also be obtained using "logging while drilling" (LWD) and/or "measurement while drilling" (MWD) which includes attaching the measurement instruments to the lower portion of a drilling tool assembly used to drill the wellbore and recording the measurements made by the instruments while the assembly is drilling the wellbore. Some of the measurements made can be transmitted to the surface in real time using a pressure modulation telemetry system, which modulates pressure of a drilling fluid (mud) flowing through the interior of the drilling tool assembly. A larger amount of well log/measurement data may be stored in a recording device disposed in the logging/measurement instrument, which can be interrogated when the instrument is retrieved from the wellbore. This information is typically recorded with respect to time. A record of instrument position in the wellbore with respect to time made at the earth's surface can then be correlated to the time/measurement record retrieved from the instrument storage device to generate a "log" of measurements with respect to wellbore depth.

### SUMMARY

Disclosed herein are embodiments of a customizable user interface that is configured to graphically display well data in real-time to an end user. The user interface includes one or more visualization modules relevant to the context of the activity being monitored or reviewed.

In Example 1, a system for providing real-time visualization of oilfield data includes a set of data aggregation servers configured to collect well data at one or more well sites (e.g., oil well sites, gas well sites, etc.). The set of aggregation servers is configured to store the well data as aggregated data. A visualization module server stores a plurality of visualization modules, each of which is configured to graphically display elements of the well data based on the aggregated data in the set of data aggregation servers. One or more advanced user computers are each configured to compose viewers including one or more of the visualization modules. Each composed viewer is configured to graphically display the well data in real-time specific to a data context of the one or more well sites. A viewer server stores the viewers composed on the one or more advanced user computers.

In Example 2, the system of Example 1 further comprises a plurality of end user computers are each configured to access one or more of the composed viewers on the viewer server. Each viewer is composed on the one or more advanced user computers to graphically display well data in real-time specific to a data context of the one or more well sites.

In Example 3, the system of either preceding example further comprises an administrator computer associated with the visualization module server, the administrator computer configured to manage the visualization modules on the visualization module server.

In Example 4, the system of any preceding Example, wherein the plurality of end user computers are configured to rate and comment on viewers stored in the viewer server and provide the rating and comment on the viewers to the one or more advanced user computers.

In Example 5, the system of any preceding Example, wherein the plurality of end user computers are configured to send requests for new viewers to the one or more advanced user computers.

In Example 6, the system of any preceding Example, wherein each end user computer is configured to rearrange the visualization modules on a selected viewer displayed on the end user computer.

In Example 7, the system of any preceding Example, wherein each end user computer is configured to automatically present one or more suggested viewers based on the data context.

In Example 8, the system of any preceding Example, wherein the viewers are web-based viewers.

In Example 9, a method for providing real-time visualization of well data includes collecting well data at one or more well sites and storing the well data as aggregated data in a set of aggregation servers. The method also includes storing a plurality of visualization modules in a visualization module server. Each visualization module is configured to graphically display elements of the well data based on the aggregated data in the set of data aggregation servers. The method further includes composing a plurality of viewers including one or more of the visualization modules on at least one advanced user computer. The method further includes graphically displaying the well data in real-time on a selected one of the plurality of viewers. The displayed well data are specific to a data context of the one or more well sites.

In Example 10, the method of Example 9 further comprises managing the visualization modules on the visualization module server on an administrator computer.

In Example 11, the method of Example 9 or 10 further comprises rating and commenting on viewers stored in a viewer server, and providing the rating and comment on the viewers to the at least one advanced user computer.

In Example 12, the method of any of Examples 9-11 further comprises sending requests for new viewers from the end user computers to the at least one advanced user computer.

In Example 13, the method of any of Examples 9-12 further comprises rearranging the visualization modules on a selected viewer from the composed viewers stored on the viewer server.

In Example 14, the method of any of Examples 9-13 further comprises automatically presenting one or more suggested viewers based on the data context.

In Example 15, the method of any of Examples 9-14, wherein the viewers are web-based viewers.

While multiple embodiments are disclosed, still other embodiments will become apparent to those skilled in the art from the following detailed description, which shows and describes illustrative embodiments of the disclosure. Accordingly, the drawings and detailed description are to be regarded as illustrative in nature and not restrictive.

### BRIEF DESCRIPTION OF THE DRAWINGS

FIGS. 1A-1D show oilfields having subterranean formations containing reservoirs therein with various operations being performed on the oilfields.

FIGS. 2A-2D are graphic representations of examples of data collected by the tools illustrated in FIGS. 1A-1D, respectively.

FIG. 3 shows an oilfield having data acquisition tools positioned at various locations along the oilfield for collecting data of a subterranean formation.

FIG. 4 shows a well site depicting a drilling operation of an oilfield.

FIG. 5 is a schematic view of a system for performing a drilling operation of an oilfield.

FIG. 6 is a block diagram illustrating the general layout for a multiple rig collaboration.

FIG. 7 is a block diagram of a system for managing, generating, and using viewers for real-time display of well data.

FIG. 8 is a screen shot of an exemplary viewer including a plurality of visualization modules.

While the disclosure is amenable to various modifications and alternative forms, specific embodiments have been shown by way of example in the drawings and are described in detail below. The disclosure, however, is not limited to the particular embodiments described. On the contrary, the disclosure is intended to cover all modifications, equivalents, and alternatives falling within the scope of the inventive subject matters as defined by the appended claims.

### DETAILED DESCRIPTION

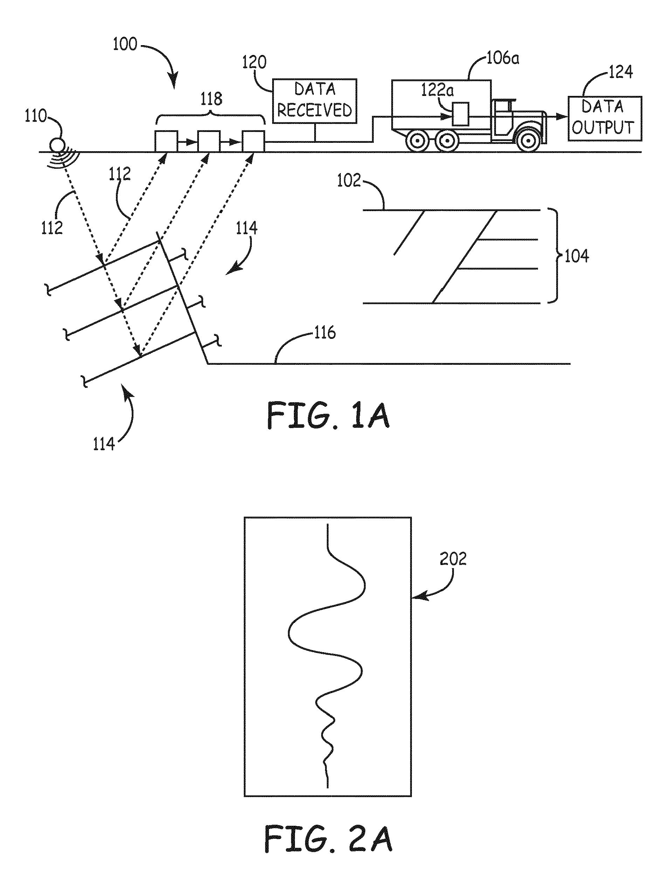

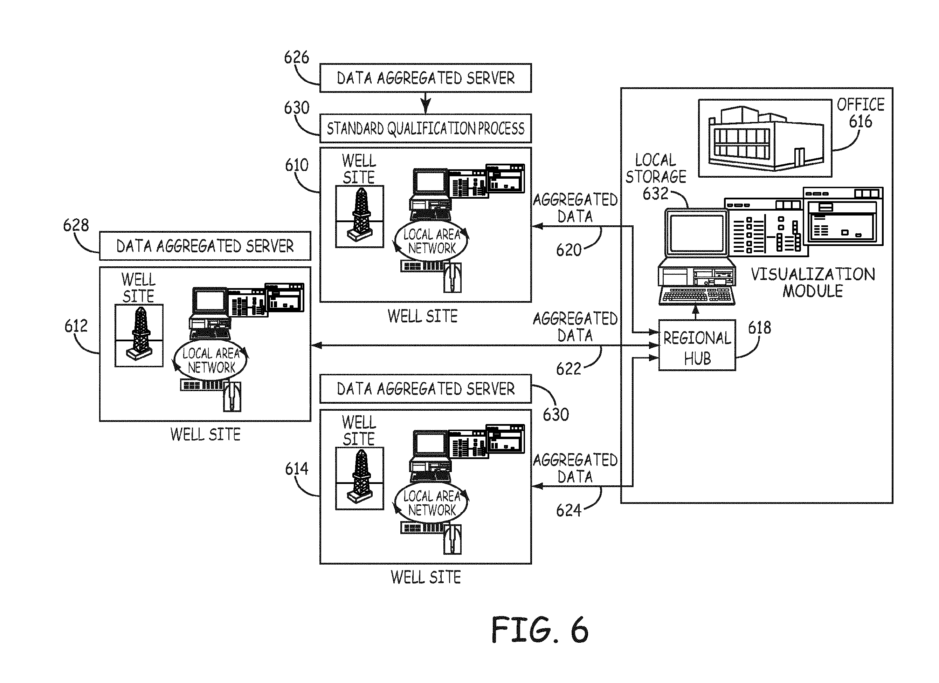

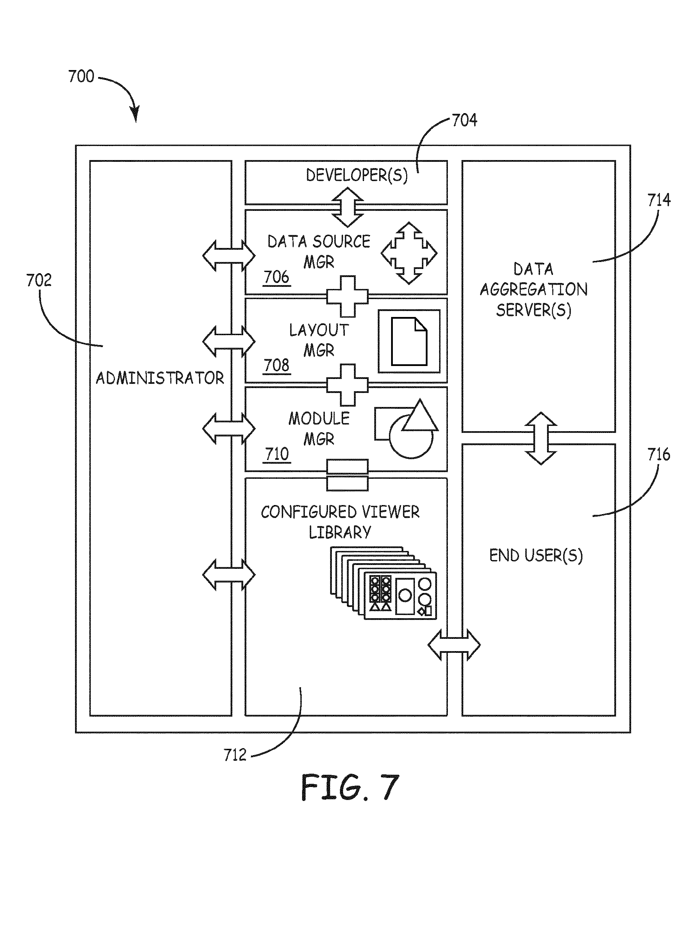

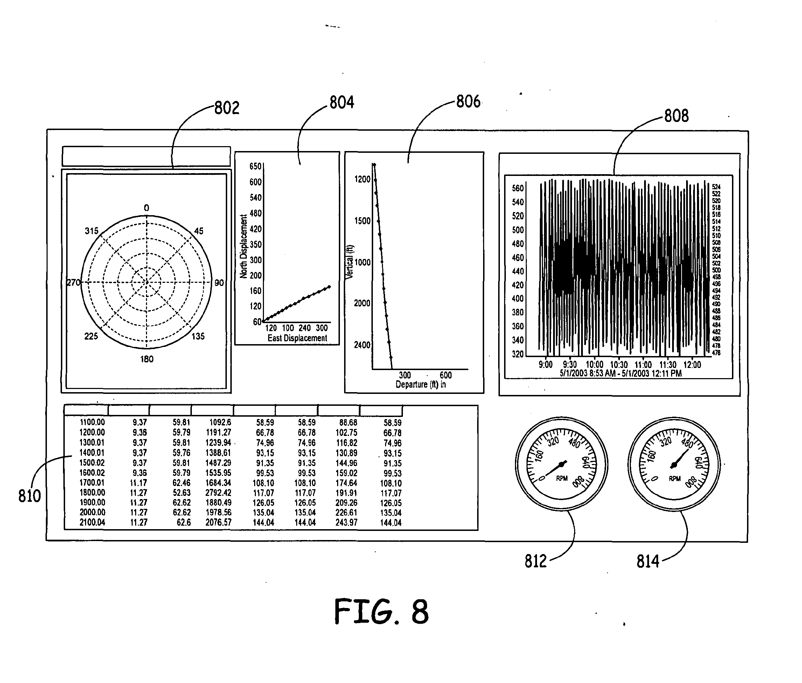

The present disclosure relates to a customizable user interface that is configured to graphically display well data in real-time to an end user. The user interface includes one or more visualization modules relevant to the context of the activity being monitored or reviewed. FIGS. 1A-1D, 3, 4, 5, and 6 illustrate exemplary environments and systems for generating data to be displayed on the customizable user interface described herein. FIGS. 2A-2D illustrate example data generated by the systems of FIGS. 1A-1D. FIG. 6 illustrates an exemplary collaborative infrastructure system for multiple rigs to combine data from multiple sources. FIG. 7 depicts an exemplary system for developing and using customized viewers for real-time visualization of data generated in the systems illustrated in FIGS. 1A-1D, 3, 4, 5, and/or 6. FIG. 8 is a screen shot of an example customized viewer, for example generated using the system illustrated in FIG. 7.

FIGS. 1A-1D depict simplified schematic views of oilfield 100 having subterranean formation 102 containing reservoir 104 therein and depicting various oilfield operations being performed on the oilfield. FIG. 1A depicts a survey operation being performed by a survey tool, such as seismic truck 106a, to measure properties of the subterranean formation 102. The survey operation is a seismic survey operation for producing sound vibrations. In FIG. 1A, one such sound vibration, sound vibration 112 generated by source 110, reflects off horizons 114 in earth formation 116. A set of sound vibration, such as sound vibration 112 is received by sensors, such as geophone-receivers 118, situated on the earth's surface.

In response to the received sound vibration(s) 112 representative of different parameters (such as amplitude and/or frequency) of sound vibration(s) 112, geophones 118 produce electrical output signals containing data concerning subterranean formation 102. Data received 120 is provided as input data to computer 122a of seismic truck 106a, and responsive to the input data, computer 122a generates seismic data output 124. This seismic data output may be stored, transmitted or further processed as desired, for example by data reduction.

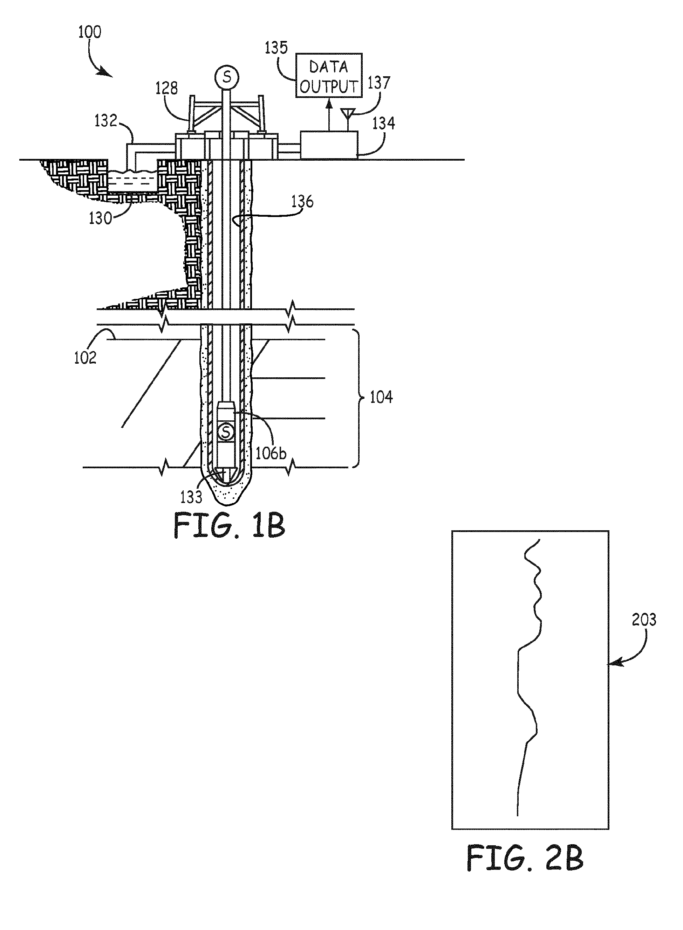

FIG. 1B depicts a drilling operation being performed by drilling tool 106b suspended by rig 128 and advanced into subterranean formation 102 to form well bore 136. Mud pit 130 is used to draw drilling mud into the drilling tool 106b via flow line 132 for circulating drilling mud through drilling tool 106b, up well bore 136 and back to the surface. The drilling mud is usually filtered and returned to mud pit 130. A circulating system may be used for storing, controlling, or filtering the flowing drilling mud. The drilling tool 106b is advanced into the subterranean formation 102 to reach reservoir 104. Each well may target one or more reservoirs. Drilling tool 106b may be adapted for measuring downhole properties using logging while drilling (LWD) or measurement while drilling (MWD) tools. The LWD/MWD tool may also be adapted for taking core sample 133 as shown, or removed so that a core sample may be taken using another tool.

Surface unit 134 is used to communicate with the drilling tool 106b and/or offsite operations. Surface unit 134 is capable of communicating with the drilling tool 106b to send commands to the drilling tool 106b, and to receive data therefrom. Surface unit 134 may be provided with computer facilities for receiving, storing, processing, and/or analyzing data from the oilfield. Surface unit 134 collects data generated during the drilling operation and produces data output 135 which may be stored or transmitted. Computer facilities, such as those of the surface unit, may be positioned at various locations about the oilfield and/or at remote locations.

Sensors S, such as gauges, may be positioned about the oilfield 100 to collect data relating to various oilfield operations as described previously. As shown, sensor S may be positioned in one or more locations in the drilling tool 106b and/or at rig 128 to measure drilling parameters, such as weight on bit, torque on bit, pressures, temperatures, flow rates, compositions, rotary speed, and/or other parameters of the oilfield operation. Sensors S may also be positioned in one or more locations in the circulating system.

The data gathered by sensors S may be collected by surface unit 134 and/or other data collection sources for analysis or other processing. The data collected by sensors S may be used alone or in combination with other data. The data may be collected in one or more databases and/or transmitted on or offsite. All or select portions of the data may be selectively used for analyzing and/or predicting oilfield operations of the current and/or other well bores. The data may be historical data, real time data, or combinations thereof. The real time data may be used in real time, or stored for later use. The data may also be combined with historical data or other inputs for further analysis. The data may be stored in separate databases, or combined into a single database.

The collected data may be used to perform analysis, such as modeling operations. For example, seismic data (described above with regard to FIG. 1A) may be used to perform geological, geophysical, and/or reservoir engineering. The reservoir, well bore, surface, and/or process data may be used to perform reservoir, well bore, geological, geophysical, or other simulations. The data outputs from the oilfield operation may be generated directly from the sensors, or after some preprocessing or modeling. These data outputs may act as inputs for further analysis.

The data may also be stored at surface unit 134. One or more surface units may be located at oilfield 100, or connected remotely thereto. Surface unit 134 may be a single unit, or a complex network of units used to perform the necessary data management functions throughout the oilfield. Surface unit 134 may be a manual or automatic system. Surface unit 134 may be operated and/or adjusted by a user.

Surface unit 134 may be provided with transceiver 137 to allow communications between surface unit 134 and various portions of oilfield 100 or other locations. Surface unit 134 may also be provided with or functionally connected to one or more controllers for actuating mechanisms at oilfield 100. Surface unit 134 may then send command signals to oilfield 100 in response to data received. Surface unit 134 may receive commands via the transceiver 137 or may itself execute commands to the controller. A processor may be provided to analyze the data (locally or remotely), make the decisions and/or actuate the controller. In this manner, oilfield 100 may be selectively adjusted based on the data collected. This technique may be used to optimize portions of the oilfield operation, such as controlling drilling, weight on bit, pump rates, or other parameters. These adjustments may be made automatically based on computer protocol, and/or manually by an operator. In some cases, well plans may be adjusted to select optimum operating conditions, or to avoid problems.

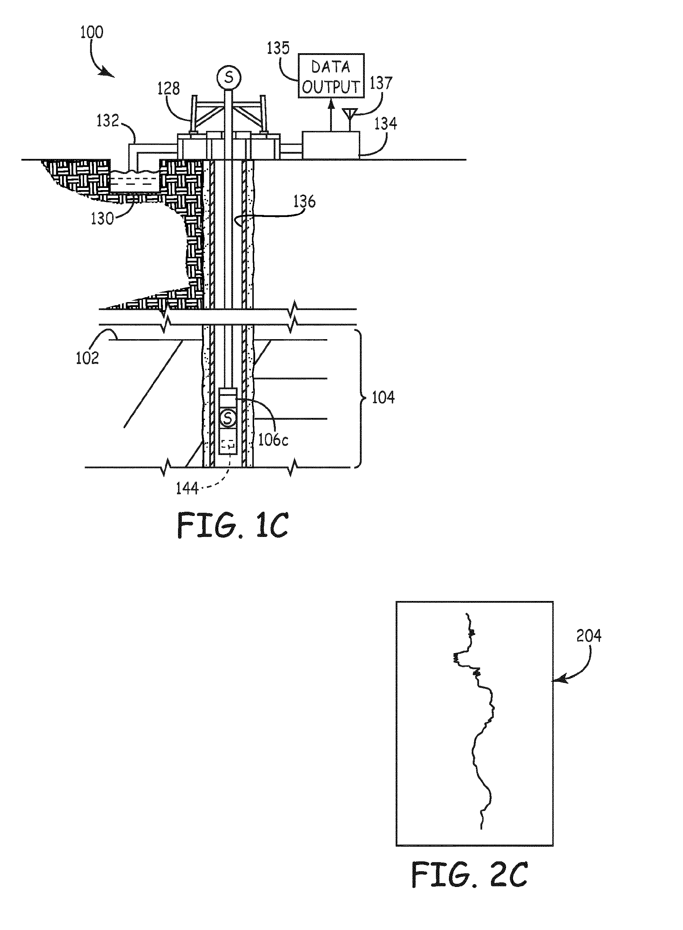

FIG. 1C depicts a wireline operation being performed by wireline tool 106c suspended by rig 128 and into well bore 136. Wireline tool 106c may be adapted for deployment into a well bore for generating well logs, performing downhole tests and/or collecting samples. Compared to the drilling tool operation depicted in FIG. 1B, wireline tool 106c may be used to provide another method and apparatus for collecting information about the subterranean formations. Wireline tool 106c may, for example, have an explosive, radioactive, electrical, or acoustic energy source 144 that sends and/or receives signals to surrounding subterranean formation 102 and fluids therein.

Wireline tool 106c may be operatively connected to, for example, geophones 118 and computer 122a of seismic truck 106a of FIG. 1A (e.g., to generate seismic data). Wireline tool 106c may also provide data to surface unit 134. Surface unit 134 collects data generated during the wireline operation and produces data output 135 that may be stored or transmitted. Wireline tool 106c may be positioned at various depths in the well bore 136 to provide a survey or other information relating to the subterranean formation 102.

Sensors S, such as gauges, may be positioned about oilfield 100 to collect data relating to various oilfield operations as described previously. As shown, the sensor S is positioned in wireline tool 106c to measure downhole parameters which relate to, for example porosity, permeability, fluid composition and/or other parameters of the oilfield operation.

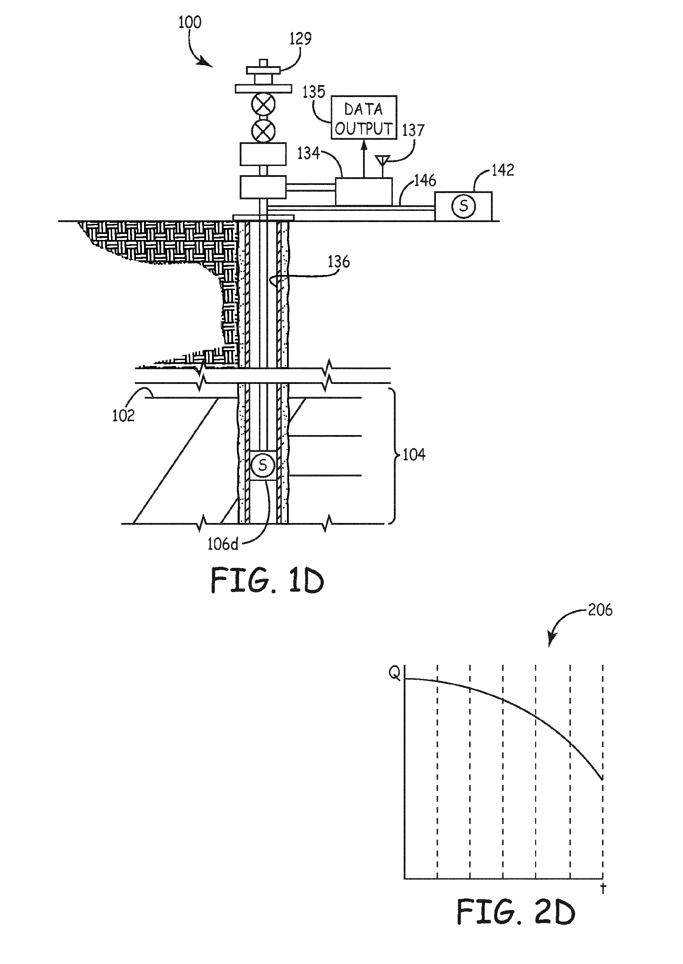

FIG. 1D depicts a production operation being performed by production tool 106d deployed from a production unit or Christmas tree 129 and into completed well bore 136 for drawing fluid from the downhole reservoirs 104 into surface facilities 142. Fluid flows from reservoirs 104 through perforations in the casing (not shown) and into production tool 106d in well bore 136 and to surface facilities 142 via a gathering network 146.

Sensors S, such as gauges, may be positioned about oilfield 100 to collect data relating to various oilfield operations as described previously. As shown, the sensor S may be positioned in production tool 106d or associated equipment, such as Christmas tree 129, gathering network 146, surface facility 142, and/or other production facility, to measure fluid parameters, such as fluid composition, flow rates, pressures, temperatures, and/or other parameters of the production operation.

While only simplified well site configurations are shown, it will be appreciated that the oilfield may cover a portion of land, sea, and/or water locations that hosts one or more well sites. Production may also include injection wells (not shown) for added recovery. One or more gathering facilities may be operatively connected to one or more of the well sites for selectively collecting downhole fluids from the well site(s).

While FIGS. 1B-1D only depict certain data acquisition tools, various measurement tools capable of sensing parameters, such as seismic two-way travel time, density, resistivity, production rate, etc., of the subterranean formation and/or its geological features may also be used. Various sensors S may be located at various positions along the well bore and/or the monitoring tools to collect and/or monitor the desired data. Other sources of data may also be provided from offsite locations.

The oilfield configuration of FIGS. 1A-1D is intended to provide a brief description of an example of an oilfield usable with embodiments described herein. Part, or all, of oilfield 100 may be on land, water, and/or sea. Also, while a single oilfield measured at a single location is depicted, embodiments described herein may be utilized with any combination of one or more oilfields, one or more processing facilities and one or more well sites.

FIGS. 2A-2D are graphical depictions of examples of data collected by the tools of FIGS. 1A-1D, respectively. FIG. 2A depicts seismic trace 202 of the subterranean formation 102 of FIG. 1A taken by seismic truck 106a. Seismic trace 202 may be used to provide data, such as a two-way response over a period of time. FIG. 2B depicts material data trace 203 for core sample 133 which, as described above, is taken by drilling tool 106b. Core sample 133 may be used to provide data for the material data trace 203, such as data related to the density, porosity, permeability, or other physical property of the core sample 133 over the length of the core sample 133. Tests for density and viscosity may be performed on the fluids in the core at varying pressures and temperatures. FIG. 2C depicts well log 204 of the subterranean formation 102 of FIG. 1C taken by wireline tool 106c. The wireline log 204 typically provides a resistivity or other measurement of the formation at various depths. FIG. 2D depicts a production decline curve or graph 206 of fluid flowing through the well bore 136 of FIG. 1D measured at surface facilities 142. The production decline curve 206 typically provides the production rate Q as a function of time t.

The respective graphs of FIGS. 2A-2C depict examples of static measurements that may describe or provide information about the physical characteristics of the formation and reservoirs contained therein. These measurements may be analyzed to better define the properties of the formation(s) and/or determine the accuracy of the measurements and/or for checking for errors. The plots of each of the respective measurements may be aligned and scaled for comparison and verification of the properties.

FIG. 2D depicts an example of a dynamic measurement of the properties of fluid flowing through the well bore. As the fluid flows through the well bore, measurements can be taken of fluid properties, such as flow rates, pressures, composition, etc. As described below, the static and dynamic measurements may be analyzed and used to generate models of the subterranean formation to determine characteristics thereof. Similar measurements may also be used to measure changes in various aspects of the formation over time.

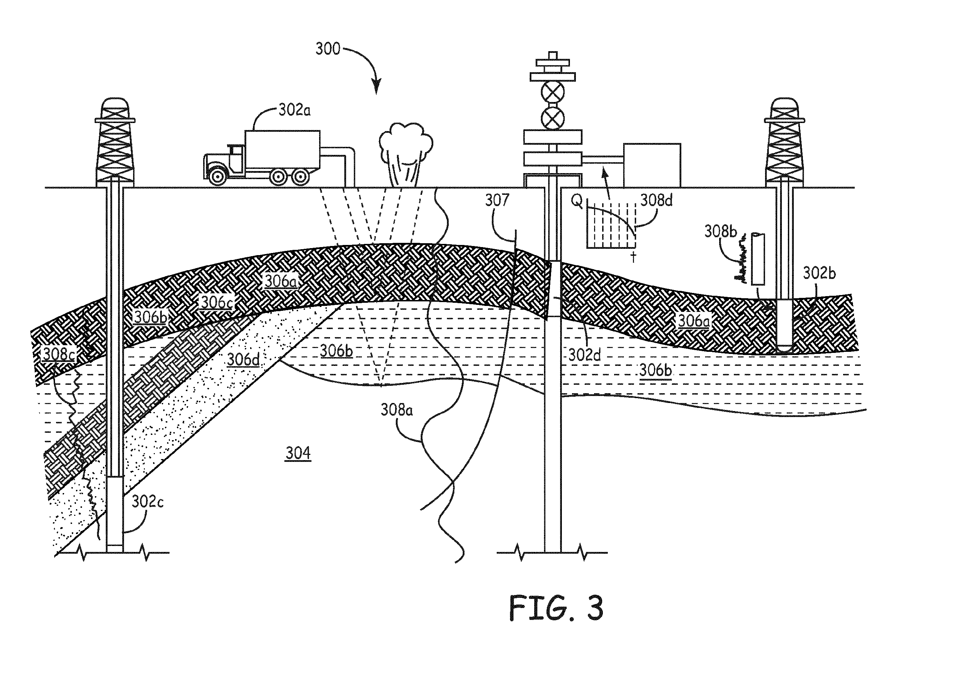

FIG. 3 is a schematic view, partially in cross section of oilfield 300 having data acquisition tools 302a, 302b, 302c and 302d positioned at various locations along the oilfield for collecting data of the subterranean formation 304. Data acquisition tools 302a-302d may be the same as data acquisition tools 106a-106d of FIGS. 1A-1D, respectively, or other data acquisition tools not depicted. As shown, data acquisition tools 302a-302d generate data plots or measurements 308a-308d, respectively. These data plots are depicted along the oilfield to demonstrate the data generated by the various operations.

Data plots 308a-308c are examples of static data plots that may be generated by data acquisition tools 302a-302c, respectively. Static data plot 308a is a seismic two-way response time and may be the same as seismic trace 202 of FIG. 2A. Static plot 308b is core sample data measured from a core sample of formation 304, similar to core sample data 133 of FIG. 2B. Static data plot 308c is a logging trace, similar to well log 204 of FIG. 2C. Production decline curve or graph 308d that may be generated by data acquisition tool 302d is a dynamic data plot of the fluid flow rate over time, similar to graph 206 of FIG. 2D. Other data may also be collected, such as historical data, user inputs, economic information, and/or other measurement data and other parameters of interest.

Subterranean structure 304 has a plurality of geological formations 306a-306d. As shown, this structure 304 has several formations or layers, including shale layer 306a, carbonate layer 306b, shale layer 306c and sand layer 306d. Fault 307 extends through shale layer 306a and carbonate layer 306b. The static data acquisition tools, e.g., tools 302a-302c, may be adapted to take measurements and detect characteristics of the formations 306a-306d.

While a specific subterranean formation with specific geological structures is depicted, it will be appreciated that the oilfield may contain a variety of geological structures and/or formations, sometimes having extreme complexity. In some locations, typically below the water line, fluid may occupy pore spaces of the formations. Each of the measurement devices may be used to measure properties of the formations and/or its geological features. While each acquisition tool is shown as being in specific locations in the oilfield, it will be appreciated that one or more types of measurement may be taken at one or more locations across one or more oilfields or other locations for comparison and/or analysis.

The data collected from various sources, such as the data acquisition tools of FIG. 3 (and also the data acquisition tools depicted in FIGS. 1A-D), may then be processed and/or evaluated. For example, seismic data displayed in static data plot 308a from data acquisition tool 302a may be used by a geophysicist to determine characteristics of the subterranean formations and features. Core data shown in static plot 308b and/or log data from well log 308c are typically used by a geologist to determine various characteristics of the subterranean formations. Production data from graph 308d may be used by the reservoir engineer to determine reservoir fluid flow characteristics. The data analyzed by the geologist, geophysicist and the reservoir engineer may be analyzed using modeling techniques.

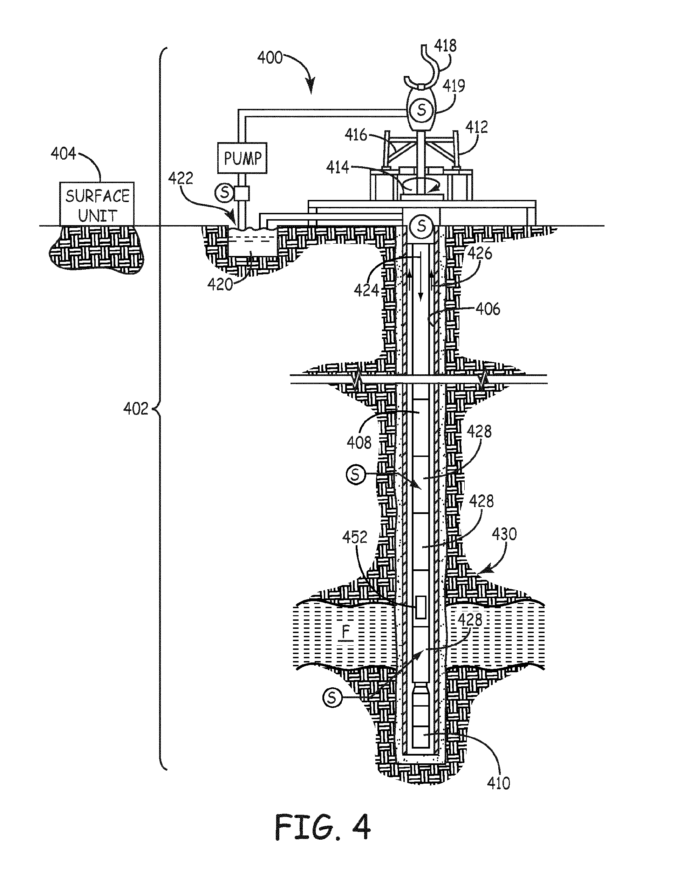

FIG. 4 is a schematic view of well site 400, depicting a drilling operation, such as the drilling operation of FIG. 1B, of an oilfield in detail. Well site 400 may include drilling system 402 and surface unit 404. In the illustrated embodiment, borehole 406 is formed by rotary drilling in a manner that is well known. Those of ordinary skill in the art given the benefit of this disclosure will appreciate, however, that this disclosure also finds application in drilling applications other than conventional rotary drilling (e.g., mud-motor based directional drilling), and is not limited to land-based rigs.

Drilling system 402 may include drill string 408 suspended within borehole 406 with drill bit 410 at its lower end. Drilling system 402 may also include the land-based platform and derrick assembly 412 positioned over borehole 406 penetrating subsurface formation F. In this illustrative example, assembly 412 includes rotary table 414, kelly 416, hook 418, and rotary swivel 419. The drill string 408 is rotated by rotary table 414, energized by known means not shown, which engages kelly 416 at the upper end of the drill string 408. Drill string 408 is suspended from hook 418, attached to a traveling block (also not shown), through kelly 416 and rotary swivel 419 which permits rotation of the drill string 408 relative to the hook 418.

Drilling system 402 may further include drilling fluid or mud 420 stored in pit 422 formed at the well site 400. Pump 424 delivers drilling fluid 420 to the interior of drill string 408 via a port in swivel 419, inducing the drilling fluid 420 to flow downwardly through drill string 408 as indicated by directional arrow 424. The drilling fluid 420 exits drill string 408 via ports in drill bit 410, and then circulates upwardly through the region between the outside of drill string 408 and the wall of borehole 406, called annulus 426. In this manner, drilling fluid 420 lubricates drill bit 410 and carries formation cuttings up to the surface as it is returned to pit 422 for recirculation.

Drill string 408 may include bottom hole assembly (BHA) 430, generally referenced, near drill bit 410 (in other words, within several drill collar lengths from the drill bit). Bottom hole assembly 430 can include capabilities for measuring, processing, and storing information, as well as communicating with surface unit 404. Bottom hole assembly 430 can further include drill collars 428 for performing various other measurement functions.

Sensors S may be located about well site 400 to collect data, in some cases in real time, concerning the operation of well site 400, as well as conditions at well site 400. Sensors S of FIG. 4 may be the same as sensors S of FIGS. 1A-D. Sensors S of FIG. 4 may also have features or capabilities, such as cameras (not shown), to provide pictures of the operation. Sensors S, which may include surface sensors or gauges, may be deployed about the surface systems to provide information about surface unit 404, such as standpipe pressure, hookload, depth, surface torque, rotary rpm, among others. In addition, sensors S, which include downhole sensors or gauges, are disposed about the drilling tool and/or well bore to provide information about downhole conditions, such as well bore pressure, weight on bit, torque on bit, direction, inclination, collar rpm, tool temperature, annular temperature and toolface, among others. The information collected by the sensors and cameras is conveyed to the various parts of the drilling system and/or the surface control unit.

Drilling system 402 can be operatively connected to surface unit 404 for communication therewith. Bottom hole assembly 430 may be provided with communication subassembly 452 that communicates with surface unit 404. Communication subassembly 452 can be adapted to send signals to and receive signals from the surface using mud pulse telemetry. Communication subassembly 452 may include, for example, a transmitter that generates a signal, such as an acoustic or electromagnetic signal, which is representative of the measured drilling parameters. Communication between the downhole and surface systems is depicted as being mud pulse telemetry, such as the one described in U.S. Pat. No. 5,517,464, assigned to the assignee of the present application. It will be appreciated that a variety of telemetry systems may be employed, such as wired drill pipe, electromagnetic, or other known telemetry systems.

The well bore may be drilled according to a drilling plan that is established prior to drilling. The drilling plan typically sets forth equipment, pressures, trajectories and/or other parameters that define the drilling process for the well site. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected.

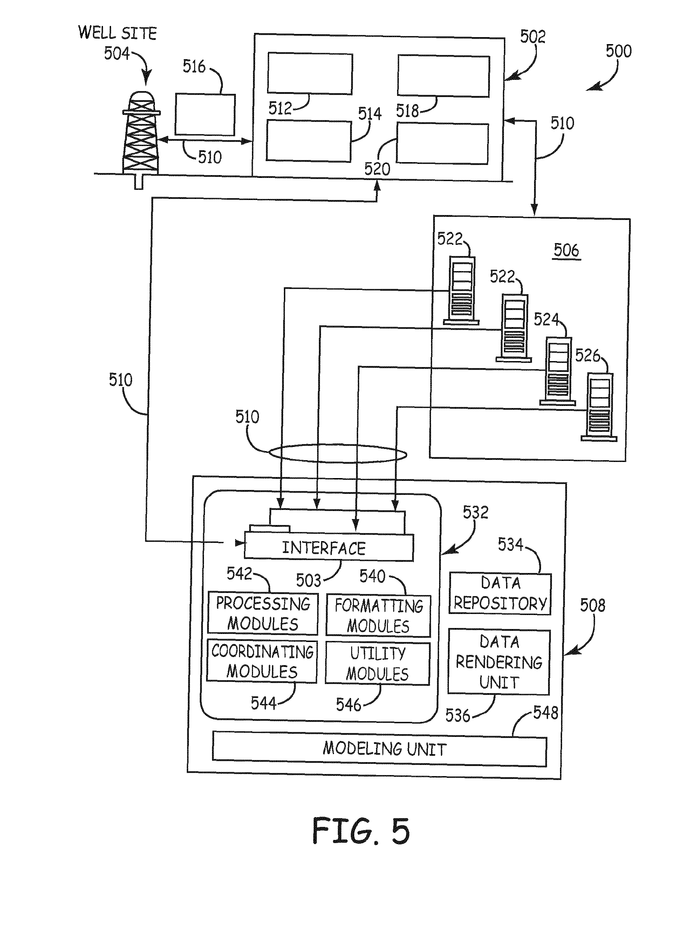

FIG. 5 is a schematic view of control system 500 for controlling a drilling operation of an oilfield. As shown, control system 500 may include surface unit 502 operatively connected to well site 504, servers 506 operatively linked to surface unit 502, and modeling tool 508 operatively linked to servers 506. As shown, communication links 510 may be provided between well site 504, surface unit 502, servers 506, and modeling tool 508. A variety of links may be provided to facilitate the flow of data through the system. The communication links may provide for continuous, intermittent, one-way, two-way, and/or selective communication throughout system 500. The communication links may be of any type, such as wired, wireless, etc.

Well site 504 and surface unit 502 may be the same as the well site and surface unit of FIG. 4. Surface unit 502 may be provided with an acquisition component 512, controller 514, display unit 516, processor 518 and transceiver 520. Acquisition component 512 collects and/or stores data of the oilfield. This data may be data measured by the sensors S of the well site as described with respect to FIG. 4. This data may also be data received from other sources.

Controller 514 is enabled to enact commands at the oilfield. Controller 514 may be provided with actuation means that can perform drilling operations, such as steering, advancing, or otherwise taking action at the well site. Drilling operations may also include, for example, acquiring and analyzing oilfield data, modeling oilfield data, managing existing oilfields, identifying production parameters, maintenance activities, or any other actions. Commands may be generated based on logic of processor 518, or by commands received from other sources. Processor 518 may be provided with features for manipulating and analyzing the data. Processor 518 may be provided with additional functionality to perform oilfield operations.

Display unit 516 may be provided at well site 504 and/or remote locations for viewing oilfield data. The oilfield data displayed may be raw data, processed data, and/or data outputs generated from various data. As will be described in more detail herein, the display may be quickly adapted to provide flexible views of the data, so that the screens depicted may be customized as desired.

Transceiver 520 may provide a means for providing data access to and/or from other sources. Transceiver 520 may also provide a means for communicating with other components, such as servers 506, well site 504, surface unit 502, and/or modeling tool 508. Servers 506 may be used to transfer data from one or more well sites to modeling tool 508. As shown, servers 506 include onsite servers 522, remote server 524, and third party server 526. Onsite servers 522 may be positioned at well site 504 and/or other locations for distributing data from surface unit 502. Remote server 524 is positioned at a location away from well site 504 and provides data from remote sources. Third party server 526 may be onsite or remote, but is operated by a third party, such as a client.

Servers 506 may be capable of transferring drilling data, such as logs/measurements, drilling events, trajectory, and/or other oilfield data, such as seismic data, historical data, economics data, or other data that may be of use during analysis. The type of server is not intended to limit the present disclosure. System 500 may be adapted to function with any type of server that may be employed.

Servers 506 may communicate with modeling tool 508 as indicated by communication links 510 therebetween. As indicated by the multiple arrows, servers 506 may have separate communication links with modeling tool 508. One or more of the servers of servers 506 may be combined or linked to provide a combined communication link.

Servers 506 may be capable of collecting a wide variety of data. The data may be collected from a variety of channels that provide a certain type of data, such as well logs. The data from servers 506 can be passed to modeling tool 508 for processing. Servers 506 may be used to store and/or transfer data.

Modeling tool 508 can be operatively linked to surface unit 502 for receiving data therefrom. In some cases, modeling tool 508 and/or server(s) 506 may be positioned at well site 504. Modeling tool 508 and/or server(s) 506 may also be positioned at various locations. Modeling tool 508 may be operatively linked to surface unit 502 via server(s) 506. Modeling tool 508 may also be included in or located near surface unit 502.

Modeling tool 508 may include interface 503, processing unit 532, modeling unit 548, data repository 534 and data rendering unit 536. Interface 503 can communicate with other components, such as servers 506. Interface 503 may also permit communication with other oilfield or non-oilfield sources. Interface 503 can receive the data and map the data for processing. Data from servers 506 typically streams along predefined channels which may be selected by interface 503.

As depicted in FIG. 5, interface 503 can select the data channel of server(s) 506 and receive the data. Interface 503 may also map the data channels to data from well site 504. The data may then be passed to the processing unit 532 of modeling tool 508. The data may be immediately incorporated into modeling tool 508 for real-time sessions or modeling. Interface 503 can also create data requests (for example surveys, logs, and risks), display user interface, and handle connection state events. Interface 503 may also instantiate the data into a data object for processing.

Processing unit 532 may include formatting modules 540, processing modules 542, coordinating modules 544, and utility modules 546. These modules are designed to manipulate the oilfield data for real-time analysis.

Formatting modules 540 can be used to conform data to a desired format for processing. Incoming data may need to be formatted, translated, converted or otherwise manipulated for use. Formatting modules 540 may be configured to enable the data from a variety of sources to be formatted and used so that it processes and displays in real time.

Formatting modules 540 can include components for formatting the data, such as a unit converter and mapping components. The unit converter may convert individual data points received from interface 530 into the format expected for processing. The format may be defined for specific units, provide a conversion factor for converting to the desired units, or allow the units and/or conversion factor to be defined. To facilitate processing, the conversions may be suppressed for desired units.

The mapping component(s) can map data according to a given type or classification, such as a certain unit, log mnemonics, precision, max/min of color table settings, etc. The type for a given set of data may be assigned, particularly when the type is unknown. The assigned type and corresponding map for the data may be stored in a file (e.g. XML) and recalled for future unknown data types.

Coordinating modules 544 may orchestrate the data flow throughout modeling tool 508. The data is manipulated so that it flows according to a choreographed plan. The data may be queued and synchronized so that it is processed according to a timer and/or a given queue size. The coordinating modules 544 may include queuing components, synchronization components, management component, mediator component, settings component and real-time handling component.

The queuing components can group the data in a queue for processing through the system. The system of queues provides a certain amount of data at a given time so that it may be processed in real time.

The synchronization components may link certain data together so that collections of different kinds of data may be stored and visualized in modeling tool 508 concurrently. In this manner, certain disparate or similar pieces of data may be choreographed so that they link with other data as the data flows through the system. The synchronization component may provide the ability to selectively synchronize certain data for processing. For example, log data may be synchronized with trajectory data. Where log samples have a depth that extends beyond the well bore, the samples may be displayed on the canvas using a tangential projection so that, when the actual trajectory data is available, the log samples will be repositioned along the well bore. Alternatively, incoming log samples that are not on the trajectory may be cached so that, when the trajectory data is available, the data samples may be displayed. In cases where the log sample cache fills up before the trajectory data is received, the samples may be committed and displayed.

The settings component can define the settings for the interface. The settings component may be set to a desired format and adjusted as necessary. The format may be saved, for example, in an extensible markup language (XML) file for future use.

The real-time handling component can instantiate and display the interface and handle its events. The real-time handling component may also create the appropriate requests for channel or channel types, and handle the saving and restoring of the interface state when a set of data or its outputs is saved or loaded.

The management component may implement the required interfaces to allow the module to be initialized by and integrated for processing. The mediator component can receives the data from the interface. The mediator may also cache the data and combine the data with other data as necessary. For example, incoming data relating to trajectories, risks, and logs may be added to wellbore models stored in modeling tool 508. The mediator may also merge data, such as survey and log data.

Utility modules 546 can provide support functions to the drilling control system. Utility modules 546 may include logging component and user interface (UI) manager component. The logging component can provide a common call for all logging data. This component allows the logging destination to be set by the application. The logging component may also be provided with other features, such as a debugger, a messenger, and a warning system, among others. The debugger can send a debug message to those using the system. The messenger can send information to subsystems, users, and others. The information may or may not interrupt the operation and may be distributed to various locations and/or users throughout the system. The warning system may be used to send error messages and warnings to various locations and/or users throughout the system. In some cases, the warning messages may interrupt the process and display alerts.

The user interface manager component may create user interface elements for displays. The user interface manager component can define user input screens, such as menu items, context menus, toolbars, and settings windows. The user interface manager component may also be used to handle events relating to these user input screens.

Processing modules 542 may be used to analyze the data and generate outputs. Processing module 542 can include trajectory management component.

The trajectory management component can handle the case when the incoming trajectory information indicates a special situation or requires special handling. The trajectory management component could therefore handle situations where the data pertains to depths that are not strictly increasing or the data indicates that a sidetrack borehole path is being created. For example, when a sample is received with a measured depth shallower than the hole depth, the trajectory management component determines how to process the data. The trajectory management component may ignore all incoming survey points until the measured depth exceeds the previous measured depth on the well bore path, merge all incoming survey points below a specified depth with the existing samples on the trajectory, ignore points above a given depth, delete the existing trajectory data and replace it with a new survey that starts with the incoming survey station, create a new well and set its trajectory to the incoming data, add incoming data to this new well, and prompt the user for each invalid point. All of these options may be exercised in combinations and can be automated or set manually.

Data repository 534 can store the data for modeling unit 548. The data may be stored in a format available for use in real-time. The data may be passed to data repository 534 from the processing unit 532. The date can be persisted in the file system (e.g., as an XML file) or in a database. The control system may determine which storage is the most appropriate to use for a given piece of data and stores the data there in a manner which enables automatic flow of the data through the rest of the system in a seamless and integrated fashion. The control system may also facilitate manual and automated workflows, such as modeling, geological, and geophysical, based upon the persisted data.

Data rendering unit 536 may provide one or more displays for visualizing the data. Data rendering unit 536 may contain a 3D canvas, a well section canvas or other canvases as desired. Data rendering unit 536 may selectively display any combination of one or more canvases. The canvases may or may not be synchronized with each other during display. Data rendering unit 536 may be provided with mechanisms for actuating various canvases or other functions in the control system.

While specific components are depicted and/or described for use in the modules of modeling tool 508, a variety of components with various functions may be used to provide the formatting, processing, utility, and coordination functions necessary to provide real-time processing in modeling tool 508. The components and/or modules may have combined functionalities.

Modeling unit 548 may perform the key modeling functions for generating complex oilfield outputs. Modeling unit 548 may be a conventional modeling tool capable of performing modeling functions, such as generating, analyzing, and manipulating earth models. The earth models typically contain exploration and production data, such as that shown in FIGS. 2A-2D & 3.

Referring now to FIG. 6, a general layout for multiple rig collaboration infrastructures is shown according to an illustrative embodiment. The replication of collaboration infrastructures at multiple rigs in a given oilfield may allow multiple well sites to be remotely supported from a single operations support center. Project team members at the various well sites 610, 612, and 614 may then work together using the collaboration infrastructures to manage the overall drilling process for an entire oilfield asset, thereby providing huge potential increases in efficiency across the entire asset.

The methods, systems, and apparatuses of collaboration infrastructures according to the illustrative embodiment may be used regardless of whether the wells are being drilled in a high-volume, low-cost land environment or a high-cost, low-volume offshore environment. While drilling projects are typically part of a multi-location "virtual" team, the illustrative collaboration infrastructures can facilitate cooperation between the various personnel involved, including an asset management team in office 616, a company man on a rig at well sites 610, 612, and 614, rig contractors and other vendors on the rig at well sites 610, 612, and 614, and engineers and support personnel located at well sites 610, 612, 614 and/or office 616. In some embodiments, the collaboration infrastructures can communicate between well sites 610, 612, and 614 and office 616 via regional hub 618. The collaboration infrastructures may also use enterprise class components coupled with processes and support institutions commensurate with the challenges and difficulties of a well environment, such as an oil well or gas well.

The collaboration infrastructures at the rig at well sites 610, 612, and 614, may aggregate data from a variety of information sources into aggregated data 620, 622, and 624. These sources can include, but are not limited to, information from a rig contractor, mud logger data, measurements-while-drilling data, logging-while-drilling data, information received from a company man, data from pore pressure monitoring, drilling optimization information, and episodic data, such as wireline data, cementing data, and drill-string testing data.

The collaboration infrastructures may also provide real-time access to aggregated data 620, 622, and 624 by the collaboration team regardless of their location at either well sites 610, 612, and 614 or office 616. Aggregated data 620, 622, and 624 can be accessed in real-time by processes such as web-based viewers, interactive viewers, import to analysis applications, and handheld access.

The collaboration infrastructures can also facilitate communication between collaboration team members at similar or identical sites, such as between rig team members of a single well site, such as one of well sites 610, 612, and 614. The collaboration infrastructures, therefore, can provide a number of applications and/or functions, such as, for example, electronic chat applications, instant message applications, shared data analysis, fax, reporting, email, and voice over internet protocol communication. The collaboration infrastructures can additionally provide other applications such as, but not limited to, wired and/or wireless local area networks, video monitoring, facsimile receipt and transmission, private network access, links to sub networks, hazardous area and other real-time displays, integration of personal digital assistants, remote administration, and remote monitoring and support. Further, as described in more detail below, the collaboration infrastructures may also include a network to quickly and efficiently provide customized viewers for real-time visualization of the aggregated data 620, 622, 624 for end users, such as personnel on the asset management team at the office 616.

The collaboration infrastructures can also provide various security features to limit access to aggregated data 620, 622, and 624. The various security features in one illustrative embodiment can include, but are not limited to, a firewall, a security patch management, personalized access control, hazardous area certification, bandwidth allocation and Quality of Service (QoS), and the ability to track malicious activity.

At office 616, the collaboration infrastructures of FIG. 6 may provide flexible deployment internal and external to a corporate network (i.e., hosted), ease of integration with existing company infrastructure, access to multiple rigs at well sites 610, 612, and 614 as required, sufficient viewing area and real-time displays, rapid assimilation of aggregated data 620, 622, and 624, and ease of context switching. The collaboration infrastructures of FIG. 6 also may provide real-time access to aggregated data 620, 622, and 624 by the remote team at office 616. Real-time access to aggregated data 620, 622, and 624 can include, but not limited to, web-based viewers, interactive viewers, import to analysis applications, and handheld access. For example, as will be described in more detail below, aggregated data 620, 622, and 624 may be viewed using a viewer that provides customized visualization of the data. The viewer may be generated and accessed within a very short period of time (e.g., one hour) to provide preferred visualization of the real-time data for the end users at the office 616. In addition, inter-communication between remote team members at office 616 may also be provided, including chat, video communication, instant messaging, shared data analysis, facsimile, reporting, email, and voice-over-internet protocol communication. Other services provided by the collaboration infrastructures may include wired and/or wireless local area networks, video monitoring, Personal Digital Assistants, Flexible Administration (Remote/Local), and Flexible Monitoring and Support (Remote/Local). As for security, the collaboration infrastructures may provide a firewall, security patch management, access control, hazardous area certification, bandwidth allocation and Quality of Service (QoS), and can easily conform to client environment.

With respect to the aggregation of aggregated data 620, 622, and 624 and access to this aggregation at office 616, although there may be many possible infrastructure solutions for data aggregation, one illustrative embodiment can utilize data aggregation servers 626, 628, and 630 on individual rigs at well sites 610, 612, and 614. Locating data aggregation servers 626, 628, and 630 on individual rigs at well sites 610, 612, and 614 may provide benefits that outweigh most logistics issues. For example, data aggregation servers 626, 628, and 630 at the rigs can provide an interface to the various vendor systems on the rigs and also provide local access to aggregated data 620, 622, 624. Locating data aggregation servers 626, 628, and 630 at the rigs may also eliminate potential traffic across a communication link from the rigs to office 616. If the data aggregation servers 626, 628, and 630 were located remotely from the rigs, such as at office 616, team members at well sites 610, 612, 614 would have to access data aggregation servers 626, 628, and 630 through the relatively scarce and expensive bandwidth of the communication link.

Data aggregation servers 626, 628, and 630 can aggregate data together to create aggregated data 620, 622, 624 in a way that aggregated data 620, 622, 624 can be viewed and analyzed using a consistent set of tools. That is, aggregated data 620, 622, 624 is not limited strictly to the native tools and software environments provided by the various vendors.

Data aggregation servers 626, 628, and 630 can also combine aggregated data 620, 622, 624 into a consistent and vendor neutral data delivery format. By using the data aggregation servers 626, 628, and 630 to aggregate/combine the data into a standard repository with a standard set of analysis tools, the value of the data can be immediately enhanced. Time that was previously spent analyzing data in the field so that the data can be prepared and implemented into a usable format may be eliminated. Therefore, all of the data collected on rigs at well sites 610, 612, and 614 can be utilized. With the different illustrative embodiments, data would not be simply eliminated because of the complexity of learning the different tools from each vendor or for each data type.

Locating the data aggregation servers 626, 628, and 630 on a rig at well sites 610, 612, and 614 can further allow for controlled and facilitated access to aggregated data 620, 622, and 624. In one illustrative embodiment, data to form aggregated data 620, 622, and 624 may be collected into the data aggregation servers 626, 628, and 630 at the rigs and transmitted to the remote team at office 616, to be stored at local storage 632. Users at a rig at one of well sites 610, 612, and 614 may access aggregated data 620, 622, 624 in real time locally on data aggregation servers 626, 628, 630 and users onshore may access aggregated data 620, 622, 624 from local storage 632 at office 616, thus minimizing the traffic over the satellite communication link or other rig connectivity. Local storage 632 can be a data storage medium that locally mirrors data that is stored at data aggregation servers 626, 628, 630. This bifurcated storage of aggregated data 620, 622, 624 may help eliminate contention for connectivity and bandwidth between office 616 and well sites 610, 612, and 614.

Combining data from well sites 610, 612, and 614 into aggregated data 620, 622, and 624 can include collecting data from a variety of vendors and systems and using various data sharing standards available for rigs. In one illustrative embodiment, the data collaboration infrastructures of FIG. 6 may acquire data in a standard data format. The standard data format can be, for example, but not limited to, the Wellsite Information Transfer Standard (WITS) format, the WITSML format, or the markup language based evolution of the Wellsite Information Transfer Standard format.

In one illustrative embodiment, data aggregation server 626 may include a standard qualification process 630 for new vendors. Standard qualification process 630 can be a software process that maps previously collected sample Wellsite Information Transfer Standard data with associated data descriptions. Once data is mapped, the mapped data can be stored in a knowledge base so that data from that vendor may be acquired and comprehended anywhere. Mapped data obtained from the standard qualification process 630 can be transferred between well sites 610, 612, 614 and office 616 to extend the comprehension of the acquired data.

FIG. 7 is a block diagram of an embodiment of system 700 for generating, managing, and accessing customized viewers for real-time visualization of well data, such as oil well data or gas well data. The exemplary system 700 can be implemented directly through standard Internet browsers, without the need to install specialized application(s) on client side. System 700 can include administrator computer 702, advanced user computer(s) 704, data source manager interface 706, layout manager interface 708, visualization module interface 710, configured viewer library server 712, data aggregation server(s) 714, and end user computer(s) 716. Data aggregation server(s) 714 may include, for example, servers for collecting and aggregating data at job sites, such as data aggregation servers 626, 628, and 630 in FIG. 6.

Administrator computer 702 can be configured to interact with data source manager interface 706, layout manager interface 708, visualization module interface 710, and configured viewer library server 712. Administrator computer 702 can also be configured to manage the tools and options available to advanced user computer(s) 704 for the design (i.e., customization only without any coding) of data viewers. The assembly of data viewers will be described in more detail below. In some embodiments, administrator computer 702 may be configured to receive packages of features from a centralized server (not shown). The received packages of features may include, for example, new or updated visualization modules, viewer templates, and/or data accessibility profiles. The user of administrator computer 702 may then store the various features for availability for use with the data source manager interface 706, layout manager interface 708, and visualization module interface 710. In some embodiments, data source manager interface 706, layout manager interface 708, and visualization module interface 710 can each be associated with a server configured to store the features. For example, each of data source manager interface 706, layout manager interface 708, and visualization module interface 710 may be associated with a separate server, or these elements may be associated with the same server. The user of administrator computer 702 may also remove features from data source manager interface 706, layout manager interface 708, and visualization module interface 710. The user of administrator computer 702 may further import or export pre-configured or composed viewers to the configured viewer library server 712.

In some embodiments, the features associated with data source manager interface 706 may include elements for managing accessibility between the composed viewers and the data stored in data aggregation server(s) 714. For example, the user of administrator computer 702 may set editing levels of some or all of the data from data aggregation server(s) 714 to read only or read/write accessibility. This, in turn, may set the level of accessibility for the data by advanced user computer(s) 704 and/or end user computer(s) 716. Data source manager interface 706 may also be configured to control other accessibility characteristics of the data stored in data aggregation server(s) 714, such as the type and amount of data that are accessible by advanced user computer(s) 704 and/or end user computer(s) 716.

The features associated with layout manager interface 708 may include elements that support the logic and capability for positioning visualization modules in composed viewers by advanced user computer(s) 704. For example, layout manager interface 708 may include viewer templates that advanced user computer(s) 704 can access and employ to generate composed viewers.

The features associated with visualization module interface 710 may include reusable and reconfigurable visualization modules that are employed to compose viewers customized for a particular data context or environment. The visualization modules can be graphical interfaces configured to compile and display data from data aggregation server(s) 714 in real-time. In this environment, "real-time" means within about 10-20 seconds of measurement at the well site to account for data transmission and processing delays inherent in a collaboration infrastructure, such as those described in FIG. 6 above. The visualization modules managed via administrator computer 702 may include gauges, dials, graphs, charts, spreadsheets, and computation/content capability responsive to client feedbacks, information/intelligence gathered or the like. Administrator computer 702 may be used to limit the parties that may access certain types or categories of visualization modules, or to add, update, or remove visualization modules stored in the visualization module server associated with visualization module interface 710.

Advanced user computer(s) 704 can be configured to access the features associated with data source manager interface 706, layout manager interface 708, and visualization module interface 710 to generate customized viewers for storage in configured viewer library server 712. The viewers may be composed by the user(s) of advanced user computer(s) for a specific data context. For example, the context associated with the data and/or the composed viewer(s) can be any of, or a combination of, segment specific activity (e.g., wireline, drilling, well services, testing, etc.), workflow or service specific activity (e.g., resistivity logging, pressure/temperature monitoring, measurement and/or logging while drilling, stimulation, etc.), tools specific activity (e.g., down-hole tools, surface sensors, etc.), and/or client specific customizations. In some embodiments, the data context may be related to the segment(s), workflow, and/or tools specific activities discussed above with regard to the oilfield and drilling operations depicted in FIGS. 1-5. Advanced user computer(s) 704 may also be employed to generate viewers including contextual data from customer specific activities.

To compose a viewer, the user of an advanced user computer 704 may access first data source manager interface 706 to set a data accessibility profile for the viewer. For example, the user of advanced user computer 704 may set the data to read only, or allow editing of the data by the end user(s). The user may also select the permission levels of the composed viewer. For example, the user may set certain viewers to "public," which allows anyone to access the viewer, or to "private," which allows only certain parties or parties with certain permission levels to access the viewer. Further, the user may select multiple data sources to display, from the same well or from different wells for, e.g., correlation.

The user of advanced user computer 704 may then access layout manager interface 708 to select one of a plurality of pre-configured viewer templates. The viewer templates may include preloaded information such as a company logo or universal viewer controls (e.g., drop down menus, navigation tabs, etc.).

When the viewer template has been selected, the user of advanced user computer 704 can access visualization module interface 710 to select visualization modules to be populated in the viewer template. The visualization modules selected by the user of advanced user computer 704 may be based on information about the well site(s) associated with the end user(s), type and amount of data generated by the well site(s), and/or input from the end user(s). The organization of the visualization modules on the viewer template may be customizable (e.g., 3D positioning on screen - vertical, horizontal, or well layer management (depth)) by the user of advanced user computer 704.

When the customized viewer has been composed, the user of advanced user computer 704 may store the composed viewer in configured viewer library server 712. The composed viewer may be published in configured viewer library server 712 for access and use by any end users. Alternatively, if the composed viewer is generated in the context of a specific job activity or workflow, the composed viewer may be stored in configured viewer library server 712 and identified as accessible only by end user(s) associated with the specific job activity or workflow. The user of advanced user computer 704 may also access composed viewers stored in configured viewer library server 712 to edit and/or remove the accessed viewers.

The users of advanced user computer 704 typically only perform configuration tasks (i.e., no software coding/development is needed), similar to putting visual content on a PowerPoint slide. As such, there is no need for the users to have knowledge on software programming, and the time to compose User Interfaces can be reduced from months to a matter of hours or less.

End user computer(s) 716 may be configured to access through a standard web browser (no specialized client side application(s)) the composed viewers stored in configured viewer library server 712 for real-time visualization of well data. The users of end user computer(s) 716 may be, for example, members of an asset management team in office 616 and/or users local to well sites 610, 612, and/or 614 in the collaboration infrastructures illustrated in FIG. 6. In some embodiments, the composed viewers may be web-based, and the end user computer(s) 716 can access the composed viewers via a web interface (e.g., a web browser). In one exemplary implementation, the web interface can access the composed viewers using a multimedia plug-in (e.g., Microsoft Silverlight). Accessing the composed viewers via a web interface may allow the latest library of composed viewers to be accessed without updating information stored locally on each of end user computer(s) 716.

A user of end user computer 716 may be provided with an interface that allows the user to select one of a plurality of public or private composed viewers stored in configured viewer library server 712. In some embodiments, end user computer 716 may be configured to automatically present one or more suggested viewers based on the data context associated with end user computer 716. For example, if end user computer 716 is associated with data from a wireline logging, only viewers appropriate for wireline logging may be presented for selection to the user of end user computer 716. The data context may also be mix of various types/areas of data including, but not limited to, the segment (wireline, LWD, MWD, etc)., segment workflow or service provided, the tool(s) used to deliver the service, and the client to which the data is to be delivered. The suggested viewers may also be provided to the user of end user computer 716 in order of relevance to the data context associated with end user computer 716. Each viewer may be mapped to multiple data contexts (i.e., multiple workflows).

When the user of end user computer 716 selects a composed viewer, the end user computer 716 may access data stored in data aggregation server(s) 714 and provide the data as inputs to the visualization modules on the selected viewer. The selected viewer can then display the data on the visualization modules to allow for analysis/monitoring of the data. As the data is provided to data aggregation server(s) 714 from the well site(s), the data can be provided to end user computer 716 to update in the visualization modules of the selected viewer in real-time.

In some embodiments, the user of end user computer 716 may have the ability to configure certain characteristics of a selected composed viewer from configured viewer library server 712. For example, the user may be able to adapt a public composed viewer for a particular job or to a specific dataset. This may include rearranging the visualization modules on the selected viewer to preference or remapping data channel(s) from a composed viewer to new data channel(s). In this latter case, the user of end user computer 716 may update a visualization module to display data associated with a different segment, workflow, and/or tool. In some embodiments, the user of end user computer 716 may store the composed viewer adapted for a job privately for later access. End user computer 716 may also be configured to allow the end user to import, export (e.g., share with other users), or remove private composed viewers from configured viewer library server 712.

End user computer 716 may further be configured to allow the end user to rate and comment on composed viewers stored in configured viewer library server 712. The ratings and/or comments may then be provided to advanced user computer(s) 704. The users associated with advanced user computer(s) 704 may then refine the composed viewers based on the ratings and comments provided by the end users. In some embodiments, the ratings and/or comments are used to prioritize display of viewers for selection by the end user. For example, when selectable viewers are automatically presented to the end user for selection, the end user may be able to rate the relevance of the presented viewers with respect to various data contexts, such as the relevance to the workflow, segment, and/or activity for which data is to be visualized.

FIG. 8 is a screen shot of an exemplary composed viewer, generated using the system described in FIG. 7. While the illustrated composed viewer is configured for viewing data in the context of drilling monitoring, the viewer may be configured for real-time viewing of data in any context. The viewer may include a plurality of visualization modules arranged and configured to graphically display data from well site(s) in real-time. In the embodiment illustrated in FIG. 8, the visualization modules presented on the composed viewer include plot 802, graphs 804, 806, and 808, spreadsheet 810, and gauges 812 and 814. The arrangement, types, and data context of visualization modules shown in the screen shot of FIG. 8 are merely illustrative, and other arrangements, configurations, and data contexts for the composed viewer are possible.

The system for providing real-time data visualization described herein provides advantages over existing systems. For example, because the application at end user computer(s) 716 can be web-based, no downtime is required to install the application locally on end user computer(s) 716, or to access new or enhanced system capabilities at end user computer(s) 716. In addition, the interaction between advanced user computer(s) 704 and end user computer(s) 716 allows for rapid design and/or customization of composed viewers for end users. This reduces the development time for new composed viewers from days or weeks to a matter of a few hours or less. The integrated rating and comment system further provides for collaborative improvements to the composed viewers.

Various modifications and additions can be made to the exemplary embodiments discussed without departing from the scope of the present disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof.

## Claims

1. A system for providing real-time visualization of well data, the system comprising:
a set of data aggregation servers configured to collect well data at one or more well sites, wherein the set of aggregation servers is configured to store the well data as aggregated data;
a visualization module server that stores a plurality of visualization modules, each visualization module configured to graphically display elements of the well data based on the aggregated data in the set of data aggregation servers;
one or more advanced user computers each configured to compose viewers including one or more of the visualization modules, each composed viewer configured to graphically display the well data in real-time specific to a data context of the one or more well sites; and
a viewer server that stores the viewers composed on the one or more advanced user computers.

2. The system of claim 1, further comprising one or more end user computers each configured to access one or more of the composed viewers on the viewer server and display the one or more viewers on said end user computer.

3. The system of claim 1, further comprising an administrator computer associated with the visualization module server, the administrator computer configured to manage the visualization modules on the visualization module server.

4. The system of any preceding claim, wherein the end user computers are configured to rate and comment on viewers stored in the viewer server and provide the rating and comment on the viewers to the one or more advanced user computers.

5. The system of any preceding claim, wherein the end user computers are configured to send requests for new viewers to the one or more advanced user computers.

6. The system of any preceding claim, wherein each end user computer is configured to rearrange the visualization modules on a selected viewer displayed on said end user computer.

7. The system of any preceding claim, wherein each end user computer is configured to automatically present one or more suggested viewers based on the data context.

8. The system of any preceding claim, wherein the viewers are web-based viewers.

9. A method for providing real-time visualization of well data, the method comprising:
collecting well data at one or more well sites;
storing the well data as aggregated data in a set of aggregation servers;
storing a plurality of visualization modules in a visualization module server, each visualization module configured to graphically display elements of the well data based on the aggregated data in the set of data aggregation servers;
composing a plurality of viewers including one or more of the visualization modules on at least one advanced user computer; and
graphically displaying the well data in real-time on a selected one of the plurality of viewers, the displayed well data specific to a data context of the one or more well sites.

10. The method of claim 9, further comprising:
managing the visualization modules on the visualization module server on an administrator computer.

11. The method of either claim 9 or 10, further comprising:
rating and commenting on viewers stored in the viewer server; and
providing the rating and comment on the viewers to the at least one advanced user computer.

12. The method of any of claims 9-11, further comprising:
sending requests for new viewers to the at least one advanced user computer.

13. The method of any of claims 9-12, further comprising:
rearranging the visualization modules on a selected viewer from the composed viewers stored on the viewer server.

14. The method of any of claims 9-13, further comprising:
automatically presenting one or more suggested viewers based on the data context.

15. The method of any of claims 9-14, wherein the viewers are web-based viewers.
